# FASCICULE DE BREVET EUROPEEN

(11) **EP 2 967 757 B1**
(45) Date de publication et mention de la délivrance du brevet: **08.09.2021**
(21) Numéro de dépôt: 14717390.0
(22) Date de dépôt: 10.03.2014
(51) Int. Cl.: A61C 5/42

(54) **INSTRUMENT ENDODONTIQUE, NOTAMMENT POUR L'ALESAGE D'UN CANAL RADICULAIRE.**
ENDODONTISCHES INSTRUMENT, INSBESONDERE ZUM AUFREIBEN EINES WURZELKANALS
ENDODONTIC INSTRUMENT, IN PARTICULAR FOR REAMING A ROOT CANAL

(30) Priorité: 12.03.2013 CH 586132013
(43) Date de publication de la demande: 20.01.2016
(73) Titulaire: FKG Dentaire S.A., 2304 La Chaux-de-Fonds (CH)
(72) Inventeur: BREGUET, Olivier, CH-2400 Le Locle (CH); ROSATO, Gianluca, CH-2300 La Chaux-de-Fonds (CH)
(74) Mandataire: Nithardt, Roland
(86) Numéro de dépôt international: PCT/CH2014/000028
(87) Numéro de publication internationale: WO 2014/139039

(56) Documents cités:
- CH-A5- 686 026
- US-A- 4 443 193
- US-A- 5 947 730
- None

## Description

### Domaine technique

La présente invention concerne un instrument endodontique notamment pour l'alésage d'un canal radiculaire d'une dent d'un patient, ledit instrument présentant un tronçon de travail se terminant par une zone d'extrémité avec une extrémité libre sous forme de pointe, ladite zone d'extrémité ayant une double fonction de guidage et de coupe, dans lequel ladite zone d'extrémité comporte d'une part un secteur conique de guidage se terminant en pointe, ce secteur ayant un angle de pointe compris entre 10° et 60° et d'autre part un secteur angulaire de coupe adjacent audit secteur conique de guidage.

### Technique antérieure

Le nettoyage et la mise en forme des canaux radiculaires d'une dent destinée à recevoir des substances d'obturation s'effectuent grâce à l'utilisation d'instruments d'alésage ayant une partie active, dite tronçon de travail, qui a pour but de façonner, de tailler et de nettoyer les parois intérieures du canal radiculaire pour le préparer à recevoir les matériaux de traitement et d'obturation afin d'éviter toute accumulation d'oxygène dans le canal, susceptible de favoriser un développement bactérien dans la dent.

Il est cependant indispensable pour le praticien de disposer d'un instrument capable de suivre le canal radiculaire afin de traiter les parois sans dévier par rapport à la direction de ce canal quelle que soit sa configuration. Or le suivi du canal radiculaire est primordialement lié aux caractéristiques de guidage de la zone d'extrémité et plus spécifiquement à la géométrie de la pointe. Néanmoins, même si le guidage est une fonction essentielle, l'usinage des parois du canal est également une fonction essentielle, de sorte que la zone d'extrémité et notamment la pointe doit impérativement être configurée pour pouvoir remplir efficacement ces deux fonctions que sont le guidage et la coupe. Vient ensuite l'enlèvement de matière qui est effectué par le tronçon de travail de l'instrument, prolongeant la zone d'extrémité et qui a, de façon connue, la fonction de coupe, la fonction d'usinage des parois du canal radiculaire et la fonction d'évacuation de la matière enlevée lors de l'usinage.

Dans la pratique la préparation du canal s'effectue avec une gamme d'instruments présentant tous des caractéristiques de guidage dans la zone d'extrémité puis des caractéristiques de coupe et d'évacuation de la matière enlevée dans la zone de travail. Le praticien commence habituellement la préparation du canal avec un instrument de diamètre nominal adapté au diamètre initial du canal dentaire, puis il remplace le premier instrument par un instrument du même type ayant un diamètre nominal supérieur et ainsi de suite en augmentant progressivement les sections des instruments.

Les instruments existants ont majoritairement une pointe de guidage qui ne présente pas de fonction coupante, de sorte qu'il est indispensable d'utiliser une gamme d'instruments dont les diamètres augmentent de façon très progressive, par exemple avec des pas de 0,05mm, ce qui impose une séquence de six instruments pour le praticien lorsqu'il doit passer d'un diamètre d'entrée de 0,10mm à 0,40mm. Si ce processus n'est pas respecté, le risque de rupture de l'instrument dans le canal est considérablement augmenté.

Il existe toutefois des instruments dits à pointe active permettant, avec un effet de coupe au centre, de pénétrer dans un canal de très petite dimension. Mais selon les directives d'utilisation, ces instruments sont à utiliser exclusivement pour des opérations de retraitement et uniquement dans la partie rectiligne du canal. Une utilisation dans une partie courbe du canal entraînerait automatiquement des perforations de la paroi canalaire.

Parmi les publications antérieures, on peut citer le brevet américain US 5 947 730 A (KALDESTAD ROY N) qui décrit un jeu d'instruments qui ont pour objet de traiter un canal de racine dentaire en se caractérisant par le fait que leur pointe est spécifiquement « non-coupante ». L'instrument selon l'invention est conçu pour résoudre le double problème technique que rencontrent les instruments affectés à l'usinage du canal radiculaire, à savoir être capables se suivre le canal existant, c'est-à-dire d'une part être guidés par les parois du canal en évitant de creuser des cavités secondaires, et d'autre part être capables de nettoyer le canal existant en éliminant les déchets qu'il contient et de gratter les parois sans les perforer. L'instrument de l'art antérieur n'est pas en mesure d'effectuer ces deux opérations puisqu'il est considéré comme ayant une pointe non-coupante « non cutting tip », ce qui lui enlève toute possibilité de remplir l'une des fonctionnalités qui caractérisent l'instrument de l'invention.

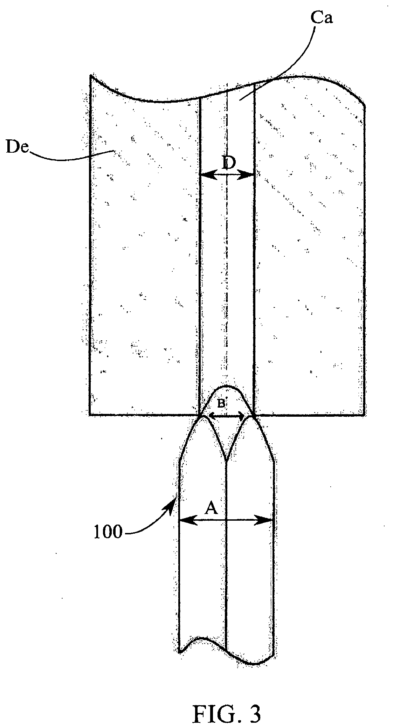

L'instrument du brevet américain US 4 443 193 A (ROANE JAMES B) est conçu pour exercer essentiellement une fonction de coupe et c'est pour cette raison que les points de coupe se trouvent, comme le montre en particulier la figure 3, au bas de l'accolade désignée par la référence 44, à savoir le point le plus éloigné par rapport à la pointe, donc dans une position périphérique éloignée par rapport à la pointe de l'instrument. Etant donné que l'instrument de l'invention a une double fonction de guidage et de coupe, il est nécessaire de privilégier le guidage lors de la pénétration dans le canal pour éviter une perforation des parois du canal et un creusement d'un canal secondaire qui ne correspond plus au canal naturel.

L'instrument correspondant au brevet suisse CH 686 026 (MAILLEFER INSTRUMENTS SA) a une fonction unique, à savoir une pénétration facilitée dans le canal radiculaire. Le moyen pour atteindre cet objectif est de réaliser une pointe ayant un angle très aigu, en tout cas plus aigu que ce qu'il est habituel de réaliser. La pénétration est facilitée, mais la préparation du canal est compliquée et ralentie. Pour compenser cet effet, le praticien est contraint d'utiliser un nombre plus élevé d'instruments de la gamme, sachant que chacun de ces instruments d'une même gamme, utilisés successivement et ayant des sections croissantes, ne peuvent avoir chacun qu'une action limitée.

L'instrument de la présente invention, de par sa conception, permet d'une part d'effectuer un guidage correct, évitant les déviations dans le canal, ce qui permet au praticien de supprimer l'obligation d'utiliser un nombre exagéré d'instruments de section croissante et de n'utiliser qu'un nombre limité d'instruments d'une même gamme et d'autre part de couper correctement la matière qui encombre le canal radiculaire en vue de préparer le canal en vue d'un traitement ultérieur, notamment une obturation dans le cadre d'une intervention pour traitement de racine. Cet instrument, à caractère universel assure au praticien un gain de temps, une minimisation des risques et une augmentation du confort pour le patient.

### Exposé de l'invention

La présente invention se propose de réaliser un instrument qui répond essentiellement à ces deux exigences complémentaires, à savoir assurer le guidage de l'instrument à la pénétration dans le canal radiculaire et effectuer la coupe au niveau des parois simultanément tout en respectant la configuration, c'est-à-dire suivre les courbures du canal.

Cet objectif est atteint par l'instrument endodontique pour l'alésage de canaux radiculaires selon l'invention, tel que défini en préambule et caractérisé en ce que le secteur angulaire de coupe comporte au moins une arête de coupe formant un angle par rapport à l'axe longitudinal de l'instrument, sur une partie dudit secteur angulaire de coupe, ledit secteur angulaire de coupe, étant intermédiaire entre le secteur conique de guidage et le tronçon de travail et formant un angle par rapport à l'axe longitudinal de l'instrument, sur une partie dudit secteur angulaire de coupe, vers le tronçon de travail de l'instrument, ce secteur angulaire de coupe présente une section progressivement croissante de la base du secteur conique de guidage, sur au moins une partie de sa longueur, en direction du tronçon de travail de l'instrument.

De manière préférentielle, l'angle de pointe du secteur conique de guidage est supérieur à l'angle que forment les arêtes de coupe avec l'axe central de l'instrument sur au moins une partie de leur longueur.

D'une manière avantageuse, le diamètre nominal de l'instrument, défini comme étant le diamètre du tronçon de travail est supérieur au diamètre de coupe effectif défini comme étant le diamètre de la zone de jonction entre la base du cône dudit secteur conique de guidage avec ledit secteur angulaire de coupe.

L'angle de pointe est avantageusement compris entre 15° et 55°.

Le diamètre de coupe effectif est de préférence sensiblement égal à 0,10 mm.

De manière préférentielle, la pointe du conique de guidage est arrondie.

Ledit secteur angulaire de coupe comporte une arête de coupe.

De manière avantageuse, ledit secteur angulaire de coupe comporte deux arêtes de coupe disposées symétriquement par rapport à l'axe central de l'instrument.

De manière préférentielle, ledit secteur angulaire de coupe comporte trois arêtes de coupe disposées aux sommets d'un triangle équilatéral.

Ledit secteur angulaire de coupe comporte quatre arêtes de coupe disposées aux sommets d'un carré.

### Brève description des figures

La présente invention et ses avantages seront mieux compris à la lecture de la description détaillée de formes de réalisation préférées du dispositif, en référence aux dessins annexés donnés à titre indicatif et non limitatif, dans lesquels :
les figures 1A, 1B et 1C sont des vues de perspective, en coupe longitudinale et en coupe transversale d'une forme de réalisation d'un instrument de l'art antérieur,
les figures 2A, 2B et 2C sont des vues de perspective, en coupe longitudinale et en coupe transversale d'une deuxième forme de réalisation d'un instrument de l'art antérieur,
la figure 3 est une vue en coupe illustrant la pénétration de l'instrument de l'art antérieur selon les figures 1, dans un canal radiculaire
la figure 4 est une vue en coupe illustrant la pénétration de l'instrument de l'art antérieur selon les figures 2, dans un canal radiculaire
les figures 5A, 5B et 5C sont des vues de perspective, en coupe longitudinale et en coupe transversale d'une forme de réalisation préférée d'un instrument selon l'invention,
la figure 6 est une vue en coupe illustrant la pénétration de l'instrument selon les figures 5, dans un canal radiculaire rectiligne,
la figure 7 est une vue en coupe illustrant la pénétration de l'instrument selon les figures 5, dans un canal radiculaire courbe,
les figures 8A, 8B et 8C sont des vues de perspective, en coupe longitudinale et en coupe transversale d'une variante de réalisation d'un instrument selon l'invention,
les figures 9A, 9B et 9C sont des vues de perspective, en coupe longitudinale et en coupe transversale d'une autre variante de réalisation d'un instrument selon l'invention, et,
les figures 10A, 10B et 10C sont des vues de perspective, en coupe longitudinale et en coupe transversale d'une autre variante de réalisation d'un instrument selon l'invention.

### Meilleures manières de réaliser l'invention

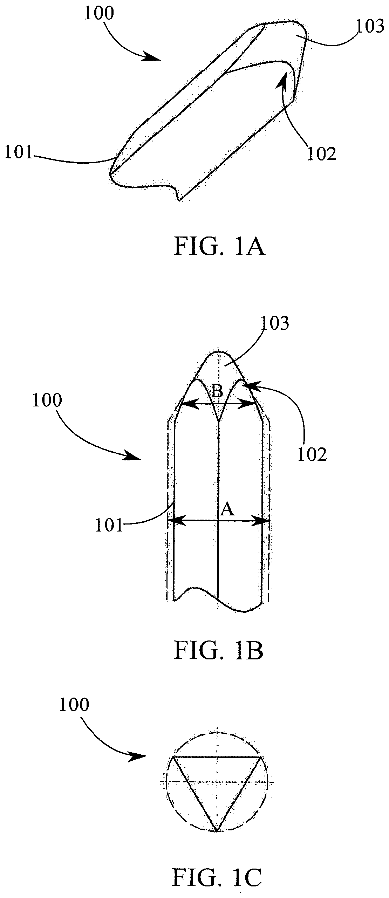

En référence aux figures 1A, 1B et 1C, l'instrument endodontique 100 pour l'alésage d'une dent d'un patient, en vue de l'alésage de canaux radiculaires, comporte un tronçon de travail 101 se terminant par une zone d'extrémité 102 de forme sensiblement conique avec une extrémité présentant une pointe émoussée 103. La zone d'extrémité 102 a une forme de cône avec un angle au sommet compris sensiblement entre 10° et 60°. Pour l'utilisation de ce type d'instruments les grandeurs suivantes sont déterminantes : le diamètre nominal A qui est le diamètre du cercle dans lequel s'inscrit une section transversale de l'instrument au niveau de tronçon de travail 101 ; le diamètre de coupe optimal B qui correspond au diamètre de la section transversale dans la zone où s'arrête la zone d'extrémité lisse en cône du secteur de guidage 13 et où commencent les arêtes de coupe du secteur de coupe 14; le diamètre initial D du canal dentaire (voir Figure 3), qui est le diamètre d'entrée dans ledit canal radiculaire.

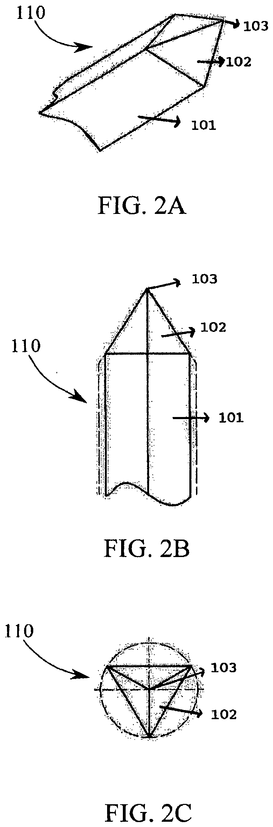

Les figures 2A, 2B et 2C sont des vues similaires aux précédentes, mais où l'instrument 110 a une pointe conique non émoussée, de sorte que les arêtes de coupe se prolongent jusqu'à l'extrémité de l'instrument, ce qui supprime l'effet de guidage de la pointe et rend l'instrument dangereux dans les zones courbes d'un canal radiculaire.

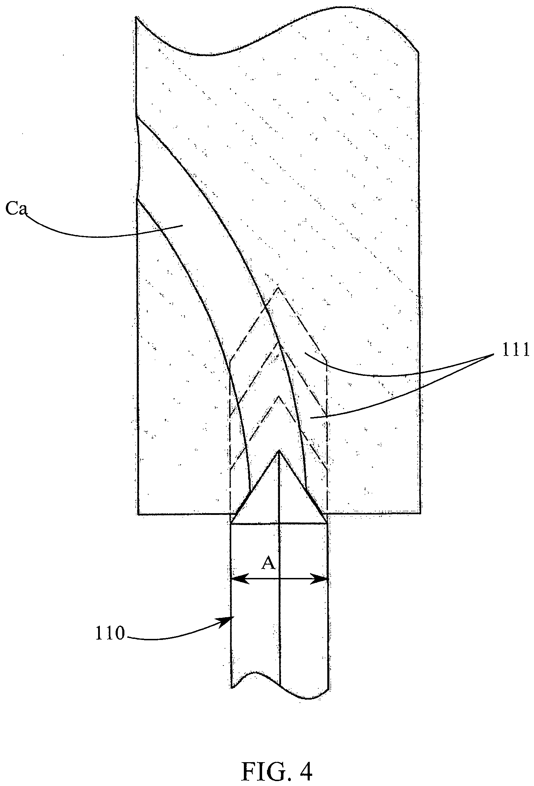

Les défauts de ce type d'instruments sont illustrés en partie par les figures 3 et 4. La figure 3 représente un instrument 100 ayant une pointe émoussée que le praticien veut faire pénétrer dans un canal radiculaire Ça d'une dent De. Le diamètre nominal de la pointe est A, le diamètre de coupe réel optimal est B et le diamètre initial du canal dentaire est D. La principale limitation de ce type de pointe est qu'elle n'est pas capable d'usiner un canal qui présente une trop grande différence de diamètre entre le diamètre nominal A de l'instrument et le diamètre initial du canal dentaire D. A titre d'exemple, si on considère que le diamètre nominal A de la pointe est de 0,40mm, l'effet de coupe réel optimal B se situe aux environs de 0,35mm. Ceci signifie que si le canal dentaire a un diamètre initial D de 0,10mm, ce qui correspond approximativement à la vue de la figure 3, le praticien devra échelonner le travail d'usinage du canal en utilisant des instruments ayant des diamètres nominaux successifs de 0,10mm ; 0,15mm ; 0,20mm ; 0,25mm ; 0,30mm ; 0,35mm; 0,40mm. Cela représente une séquence de six instruments.

Dans la pratique, les utilisateurs ont tendance à « sauter » certains instruments, par exemple, passer directement de l'instrument ayant un diamètre nominal de 0,30mm à l'instrument ayant un diamètre nominal de 0,40mm, ceci afin de gagner du temps en simplifiant la procédure. Toutefois, cette « impasse » s'effectue au détriment de la sécurité en raison du risque de rupture de pointe sachant en outre que l'instrument ne peut pas travailler de manière optimale.

Les instruments 110 du type représenté par les figures 2 sont appelés instruments à pointe active et permettent, grâce à un effet de coupe au centre, de pénétrer dans un canal de très petite dimension. Il convient de remarquer que ces pointes dites actives sont à utiliser exclusivement pour des opérations de retraitement dans la partie rectiligne d'un canal. La figure 4 illustre une application d'un instrument 10 dans un canal radiculaire courbe Ça ayant une section initiale sensiblement inférieure au diamètre nominal A de l'instrument. On constate que la pointe de l'instrument 110 poursuit sa trajectoire rectiligne dans le sens de son axe longitudinal, sans suivre la courbe du canal Ça, de telle manière que sa pointe perce les parois du canal comme le montrent les positions 111 de ladite pointe de l'instrument 110. La perforation de la paroi canalaire Ça doit impérativement être évitée lors d'un traitement, c'est pourquoi l'utilisation de ce type d'instrument présente des risques pour le patient.

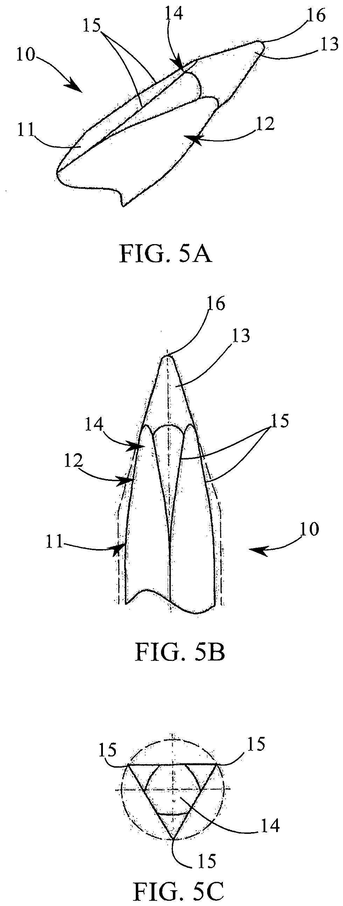

Les figures 5A, 5B et 5C représentent une première forme de réalisation, considérée comme la forme préférée d'un instrument 10 selon l'invention, présentant un tronçon de travail 11 se terminant par une zone d'extrémité 12 avec une extrémité ayant une forme générale de pointe conique. Ladite zone d'extrémité 12 comporte d'une part un secteur d'extrémité, appelé secteur de guidage 13 se terminant par une pointe arrondie ou émoussée, et d'autre part un secteur coupant, appelé secteur de coupe 14, disposé à l'arrière du secteur de guidage 13. Le secteur de coupe 14 comporte au moins une arête de coupe 15, de préférence plusieurs arêtes de coupe 15 et est situé entre le secteur de guidage 13 et le tronçon de travail 11. Ladite zone d'extrémité 12 présente un angle au sommet compris entre 10° et 60°. Le secteur de coupe 14 s'étend sur une certaine longueur et est intermédiaire entre le secteur de guidage 13 et le tronçon de travail 11. Le secteur de coupe 14 peut présenter une section progressivement croissante de la base du secteur de guidage 13, sur au moins une partie de sa longueur, en direction du tronçon de travail 11 de l'instrument 10.

Dans l'exemple représenté, les arêtes de coupe 15 sont au nombre de trois, également réparties autour de la périphérie de l'instrument 10. La section transversale de la figure 5C montre les arêtes de coupe 15 disposées aux sommets d'un triangle équilatéral. On notera que la pointe 16 de l'instrument est émoussée avec un profil arrondi, ce qui permet à l'instrument d'assumer une fonction de guidage en lui permettant de suivre le tracé du canal radiculaire quelle que soit sa forme et notamment sa courbure, sans perforer les parois naturelles et blesser la dentine.

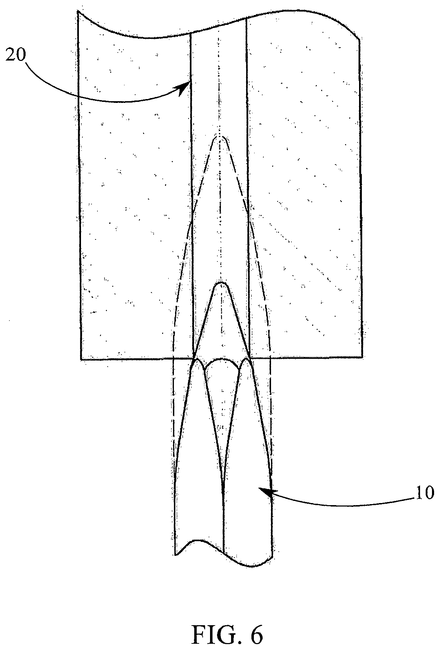

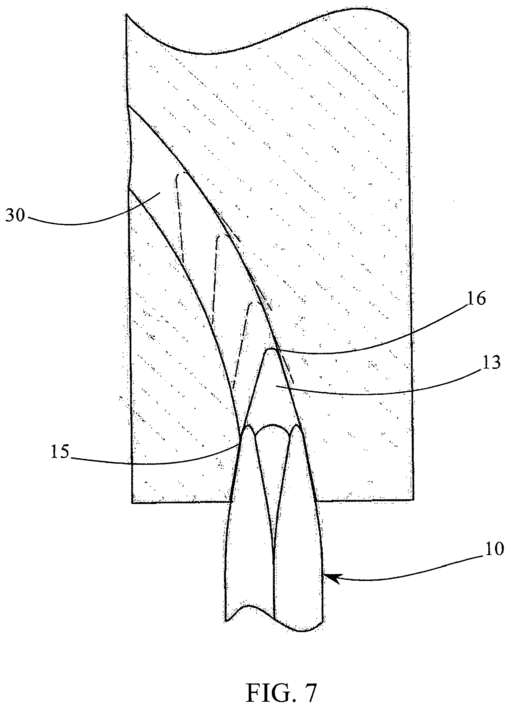

Cette pénétration est représentée schématiquement dans un canal rectiligne par la figure 6 et dans un canal courbe par la figure 7. Dans le canal rectiligne 20 l'instrument est choisi de telle manière que son diamètre de coupe optimal corresponde au diamètre initial du canal. L'usinage du canal peut s'effectuer efficacement et l'élargissement du canal se fait progressivement jusqu'à atteindre le diamètre nominal de l'instrument.

La figure 7 illustre la pénétration de la pointe d'un instrument 10 selon l'invention dans un canal courbe 30. Grâce à la géométrie émoussée de la pointe 16 de l'instrument 10, cette dernière suit la courbure sans risquer de perforer les parois et de creuser un deuxième canal dans la dent, comme le montre la figure 4, avec un instrument de l'art antérieur.

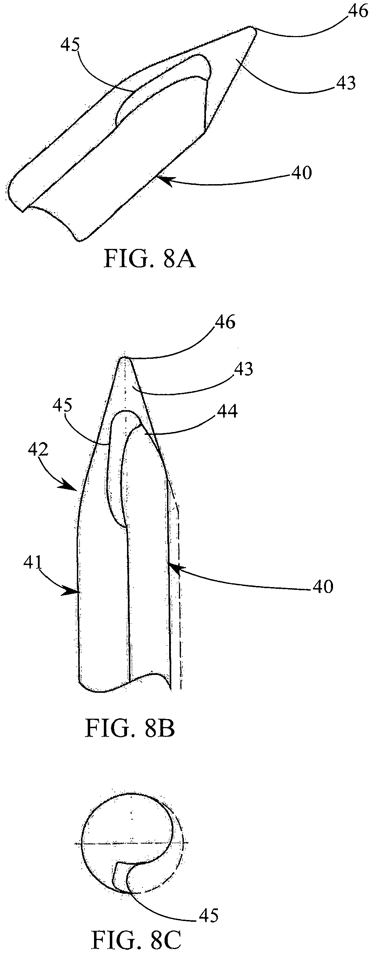

Les figures 8A, 8B et 8C illustrent un instrument 40 selon l'invention qui diffère de l'instrument 10 tel que le représentent les figures 5A, 5B et 5C en ce qu'il ne comporte qu'une seule arête de coupe 45 sur son secteur angulaire de coupe 44 et sur son tronçon de travail 41 se terminant par la zone d'extrémité 42. La pointe 43 en forme de cône 46 est émoussée.

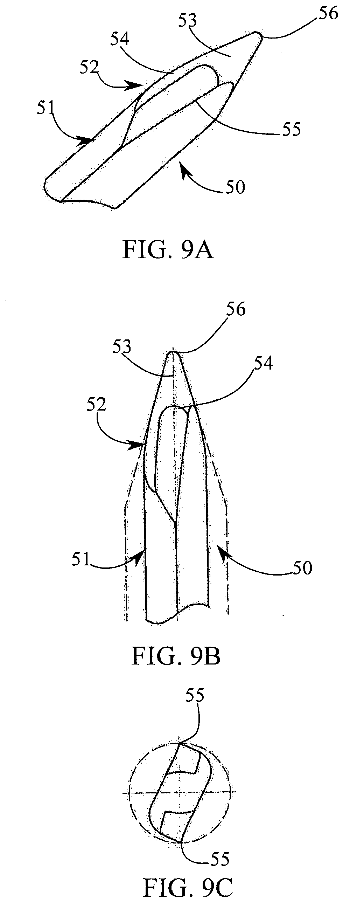

Les figures 9A, 9B et 9C illustrent un instrument 50 selon l'invention qui diffère de l'instrument 10 tel que le représentent les figures 5A, 5B et 5C en ce qu'il comporte deux arêtes de coupe 55 sur son secteur angulaire de coupe 54 et sur son tronçon de travail 51 se terminant par la zone d'extrémité 52. La pointe 53 en forme de cône 56 est émoussée. Les arêtes de coupe 55 sont disposées symétriquement par rapport à l'axe longitudinal de l'instrument.

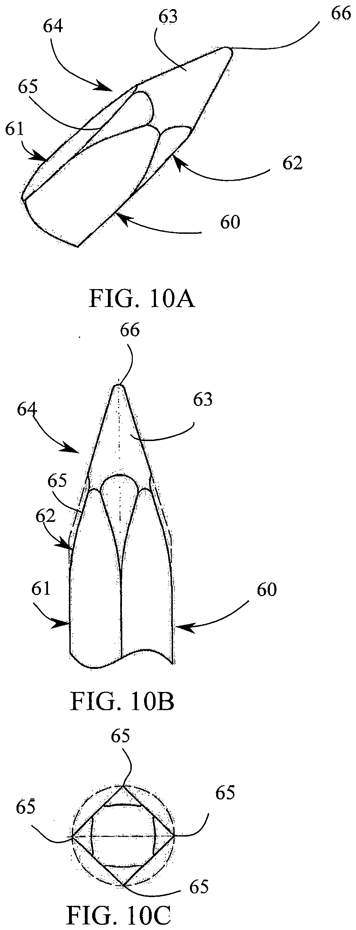

Les figures 10A, 10B et 10C illustrent un instrument 60 selon l'invention qui diffère de l'instrument 10 tel que le représentent les figures 5A, 5B et 5C en ce qu'il comporte quatre arêtes de coupe 65 sur son secteur angulaire de coupe 64 et sur son tronçon de travail 61 se terminant par la zone d'extrémité 62. La pointe 63 en forme de cône 66 est émoussée. Les arêtes de coupe 65 sont disposées deux à deux symétriquement par rapport à l'axe longitudinal de l'instrument.

Ces différentes variantes présentent les mêmes caractéristiques essentielles que celles de l'instrument des figures 5.

La présente invention n'est pas limitée aux formes de réalisation décrites, mais peut subir différentes modifications ou variantes évidentes pour l'homme du métier. Le nombre d'arêtes de coupe peut varier, la limite étant imposée par la dimension de l'instrument, plus le diamètre nominal et petit, plus il sera difficile de multiplier le nombre des arêtes.

## Revendications

1. Instrument endodontique notamment pour l'alésage d'un canal radiculaire d'une dent d'un patient, ledit instrument présentant un tronçon de travail (11) se terminant par une zone d'extrémité (12) avec une extrémité libre sous forme de pointe, ladite zone d'extrémité ayant une double fonction de guidage et de coupe, dans lequel ladite zone d'extrémité (12) comporte d'une part un secteur conique de guidage (13) se terminant en pointe, ce secteur ayant un angle de pointe compris entre 10° et 60° et d'autre part un secteur angulaire de coupe (14, 44, 64) adjacent audit secteur conique de guidage (13),
**caractérisé en ce que** ce secteur angulaire de coupe (14, 44, 64) comporte au moins une arête de coupe (15) formant un angle par rapport à l'axe longitudinal de l'instrument, sur une partie dudit secteur angulaire de coupe (14, 44, 64) ledit secteur angulaire de coupe (14, 44, 64), étant intermédiaire entre le secteur conique de guidage(13) et le tronçon de travail (11) et formant un angle par rapport à l'axe longitudinal de l'instrument, sur une partie dudit secteur angulaire de coupe (14, 44, 64), vers le tronçon de travail (11) de l'instrument (10), ce secteur angulaire de coupe (14, 44, 64) présente une section progressivement croissante de la base du secteur conique de guidage (13), sur une partie de sa longueur, en direction du tronçon de travail (11) de l'instrument (10).

2. Instrument endodontique selon la revendication 1, **caractérisé en ce que** l'angle de pointe du secteur conique de guidage (13) est supérieur à l'angle que forment les arêtes de coupe (15) avec l'axe central de l'instrument (10) sur une partie de leur longueur.

3. Instrument endodontique selon la revendication 1, **caractérisé en ce que** le diamètre nominal de l'instrument, défini comme étant le diamètre du tronçon de travail (11) est supérieur au diamètre de coupe effectif défini comme étant le diamètre de la zone de jonction entre la base du cône dudit secteur conique de guidage (13) avec ledit secteur angulaire de coupe (14).

4. Instrument endodontique selon la revendication 1, **caractérisé en ce que** l'angle de pointe est compris entre 15° et 55°.

5. Instrument endodontique selon la revendication 1, **caractérisé en ce que** le diamètre de coupe effectif est sensiblement égal à 0,10 mm.

6. Instrument endodontique selon la revendication 1, **caractérisé en ce que** la pointe du conique de guidage est arrondie.

7. Instrument endodontique selon l'une quelconque des revendications précédentes, **caractérisé en ce que** ledit secteur angulaire de coupe (44) comporte une arête de coupe (45).

8. Instrument endodontique selon l'une quelconque des revendications 1 à 6, **caractérisé en ce que** ledit secteur angulaire de coupe (14) comporte deux arêtes de coupe (15) disposées symétriquement par rapport à l'axe central de l'instrument.

9. Instrument endodontique selon l'une quelconque des revendications 1 à 6, **caractérisé en ce que** ledit secteur angulaire de coupe (64) comporte trois arêtes de coupe (65) disposées aux sommets d'un triangle équilatéral.

10. Instrument endodontique selon l'une quelconque des revendications 1 à 6, **caractérisé en ce que** ledit secteur angulaire de coupe (64) comporte quatre arêtes de coupe (65) disposées aux sommets d'un carré.

## Patentansprüche

1. Endodontisches Instrument, insbesondere zum Aufreiben eines Wurzelkanals eines Zahnes eines Patienten, wobei das Instrument einen Arbeitsabschnitt (11) aufweist, der in einem Endbereich (12) mit einem freien Ende in Form einer Spitze endet, wobei der Endbereich eine doppelte Funktion des Führens und Schneidens hat, wobei der Endbereich (12) einerseits einen konischen Führungssektor (13) umfasst, der in einer Spitze endet, wobei dieser Sektor einen Spitzenwinkel zwischen 10° und 60° aufweist, und andererseits einen winkligen Schneidsektor (14, 44, 64), der an den konischen Führungssektor (13) angrenzt,
**dadurch gekennzeichnet, dass**
dieser winklige Schneidsektor (14, 44, 64) mindestens eine Schneidkante (15) aufweist, die einen Winkel in Bezug auf die Längsachse des Instruments bildet, und zwar auf einem Teil des winkligen Schneidsektors (14, 44, 64), wobei der winklige Schneidsektor (14, 44, 64) zwischen dem konischen Führungssektor (13) und dem Arbeitsabschnitt (11) liegt und über einen Teil des winkligen Schneidsektors (14, 44, 64) einen Winkel in Bezug auf die Längsachse des Instruments in Richtung des Arbeitsabschnitts (11) des Instruments (10) bildet, wobei der winklige Schneidsektor (14, 44, 64) einen progressiv zunehmenden Querschnitt von der Basis des konischen Führungssektors (13) über einen Teil seiner Länge in Richtung des Arbeitsabschnitts (11) des Instruments (10) aufweist.

2. Endodontisches Instrument nach Anspruch 1,
**dadurch gekennzeichnet, dass**
der Spitzenwinkel des konischen Führungssektors (13) größer als der Winkel, den die Schneidkanten (15) über einen Teil ihrer Länge mit der Mittelachse des Instruments (10) bilden, ist.

3. Endodontisches Instrument nach Anspruch 1,
**dadurch gekennzeichnet, dass**
der Nenndurchmesser des Instruments, definiert als der Durchmesser des Arbeitsabschnitts (11), größer als der effektive Schneiddurchmesser, definiert als der Durchmesser des Verbindungsbereichs zwischen der Basis des Konus des konischen Führungssektors (13) mit dem winkligen Schneidsektor (14), ist.

4. Endodontisches Instrument nach Anspruch 1,
**dadurch gekennzeichnet, dass**
der Spitzenwinkel zwischen 15° und 55° liegt.

5. Endodontisches Instrument nach Anspruch 1,
**dadurch gekennzeichnet, dass**
der effektive Schneiddurchmesser im Wesentlichen gleich 0,10 mm ist.

6. Endodontisches Instrument nach Anspruch 1,
**dadurch gekennzeichnet, dass**
die Spitze der konischen Führung abgerundet ist.

7. Endodontisches Instrument nach einem der vorhergehenden Ansprüche, **dadurch gekennzeichnet, dass**
der winklige Schneidsektor (44) eine Schneidkante (45) aufweist.

8. Endodontisches Instrument nach einem der Ansprüche 1 bis 6,
**dadurch gekennzeichnet, dass**
der winklige Schneidsektor (14) zwei symmetrisch zur Mittelachse des Instruments angeordnete Schneidkanten (15) aufweist.

9. Endodontisches Instrument nach einem der Ansprüche 1 bis 6,
**dadurch gekennzeichnet, dass**
der winklige Schneidsektor (64) drei an den Eckpunkten eines gleichseitigen Dreiecks angeordnete Schneidkanten (65) aufweist.

10. Endodontisches Instrument nach einem der Ansprüche 1 bis 6,
**dadurch gekennzeichnet, dass**
der winklige Schneidsektor (64) vier an den Eckpunkten eines Quadrats angeordnete Schneidkanten (65) aufweist.

## Claims

1. Endodontic instrument, in particular for reaming a root canal of a tooth of a patient, said instrument having a working portion (11) which terminates in an end zone (12) with a free end in the shape of a tip, said end zone having a dual function of guiding and cutting, in which said end zone (12) has, on the one hand, a conical guiding sector (13) terminating in a tip, this sector having an apical angle of between 10° and 60°, and, on the other hand, an angular cutting sector (14, 44, 64) adjacent to said conical guiding sector (13), **characterized in that** this angular cutting sector (14, 44, 64) has at least one cutting edge (15) forming an angle with respect to the longitudinal axis of the instrument, over a part of said angular cutting sector (14, 44, 64), said angular cutting sector (14, 44, 64) being intermediate between the conical guiding sector (13) and the working portion (11) and forming an angle with respect to the longitudinal axis of the instrument, over a part of said angular cutting sector (14, 44, 64), towards the working portion (11) of the instrument (10), this angular cutting sector (14, 44, 64) having a cross section progressively increasing from the base of the conical guiding sector (13), over a part of its length, in the direction of the working portion (11) of the instrument (10).

2. Endodontic instrument according to Claim 1, **characterized in that** the apical angle of the conical guiding sector (13) is greater than the angle that the cutting edges (15) form with the central axis of the instrument (10) over a part of their length.

3. Endodontic instrument according to Claim 1, **characterized in that** the nominal diameter of the instrument, defined as being the diameter of the working portion (11), is greater than the effective cutting diameter, defined as being the diameter of the junction zone between the base of the cone of said conical guiding sector (13) and said angular cutting sector (14).

4. Endodontic instrument according to Claim 1, **characterized in that** the apical angle is between 15° and 55°.

5. Endodontic instrument according to Claim 1, **characterized in that** the effective cutting diameter is substantially equal to 0.10 mm.

6. Endodontic instrument according to Claim 1, **characterized in that** the tip of the guiding cone is rounded.

7. Endodontic instrument according to any one of the preceding claims, **characterized in that** said angular cutting sector (44) has one cutting edge (45).

8. Endodontic instrument according to any one of Claims 1 to 6, **characterized in that** said angular cutting sector (14) has two cutting edges (15) arranged symmetrically with respect to the central axis of the instrument.

9. Endodontic instrument according to any one of Claims 1 to 6, **characterized in that** said angular cutting sector (64) has three cutting edges (65) arranged at the vertices of an equilateral triangle.

10. Endodontic instrument according to any one of Claims 1 to 6, **characterized in that** said angular cutting sector (64) has four cutting edges (65) arranged at the vertices of a square.
